(19) **Europäisches Patentamt / European Patent Office / Office européen des brevets**

(11) **EP 1 801 156 B1**

(12) **EUROPEAN PATENT SPECIFICATION**

(45) Date of publication and mention
of the grant of the patent:
**02.12.2009  Bulletin 2009/49**

(51) Int Cl.:
**C08L 23/14** *(2006.01)*    **C08F 297/08** *(2006.01)*

(21) Application number: **05028243.3**

(22) Date of filing: **22.12.2005**

(54) **Polyolefin compositions**

Polyolefinzusammensetzungen

Compositions polyoléfiniques

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.06.2007  Bulletin 2007/26**

(73) Proprietor: **Borealis Technology Oy
06101 Porvoo (FI)**

(72) Inventor: **Malm, Bo
02110 Espoo (FI)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 236 769    EP-A- 1 510 547
EP-A- 1 659 151    US-B1- 6 747 103**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention concerns a polyolefin composition, containing a heterophasic propylene copolymer, a polymeric nucleating agent and low-density polyethylene, suitable for use in wide variety of end applications including thin wall packaging and thermoforming.

## Prior art

Heterophasic polypropylene compositions are known in the art and have, in particular, been used in areas having more demanding requirements with respect to impact strength over a wider temperature range, compared with other propylene copolymers, such as homopolymers and random copolymers. WO 2004/055101 discloses a heterophasic polypropylene composition, in particular, suitable for the formation of flat films for thermoforming.

One drawback associated with heterophasic polypropylene compositions is the fact that such compositions usually show a rather low transparency in view of the fact that a heterophasic polypropylene composition comprises a matrix phase and a dispersed (rubber) phase impairing the optical properties of the composition.

The above-mentioned international patent application accordingly proposes, in order to improve the transparency of a heterophasic polypropylene composition, the use of a α-nucleating agent selected, in particular, from low molecular weight compounds such as phosphate salt-derived nucleating agents (page 5 of WO 2004/055101) and sorbitol-derived nucleating agents (see page 7 of WO 2004/055101). Other suitable nucleating agents disclosed in the above-mentioned international patent application are metallic salts of aromatic carboxylic acids and metallic salts of aliphatic carboxylic acids, inorganic compounds such as talc, as well as vinyl cyclohexane polymers.

EP 1 236 769 A1 discloses a heterophasic propylene polymer. US 6,747,103 B1 discloses a high stiffness polymer composition. EP 1 510 547 A1 discloses a polypropylene composition with improved resistance to stress whitening.

A drawback of the prior art compositions, however, is the fact that a sufficient transparency often cannot be obtained, in particular with polymeric nucleating agents. Approaches using the master batch technology often suffer from the drawback that it is very troublesome to incorporate by mechanical blending high amounts of nucleating agents with a satisfactory degree of evenness of the distribution into a polymer composition. On the other hand low molecular weight nucleating agents, such as sorbitol-derived nucleating agents, are relatively costly which is unfavourable, since high amounts thereof are often needed. Furthermore, such low molecular weight components may give rise to further problems during the lifetime of a manufactured product, such as migration, blooming etc., resulting in a deterioration of the product quality, with respect to the optical properties such as haze and transparency as well as with respect to physical properties.

## Object of the present invention

Accordingly, the present invention aims at overcoming the drawbacks associated with the prior art. In particular, the present invention aims at providing a further polyolefin composition comprising a heterophasic propylene copolymer wherein the polyolefin composition provides an advantageous transparency, compared with the known heterophasic polypropylene compositions. The present invention furthermore aims at a possibility to avoid the use of the expensive low molecular weight nucleating agents, such as sorbitol-derived nucleating agents, without sacrificing the demands with respect to transparency. In particular, the present invention aims at finding less expensive possibilities to improve the transparency of a heterophasic propylene copolymer, which preferably is to be achieved using standard polymer processing devices.

## Brief description of the present invention

The present invention solves the above-outlined problems by providing a polyolefin composition as defined in claim 1. Preferred embodiments are defined in dependent subclaims 2 to 9. The present invention furthermore defines a process for preparing the polyolefin composition as defined in claim 10. Finally, the present invention provides the method for improving the haze value of a heterophasic propylene copolymer as defined in claim 11 and the use of low-density polyethylene for improving the haze value of a heterophasic propylene copolymer as defined in claim 12. Further embodiments of the present invention are explained in detail in the following description. The examples as contained therein are to be considered as illustrative but not limiting.

## Description of the figures

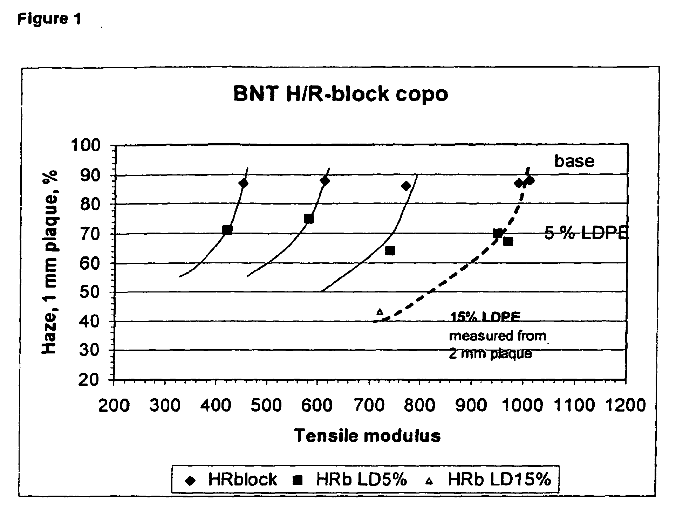

Figure 1 shows the correlation between haze and tensile modulus for examples and comparative examples.

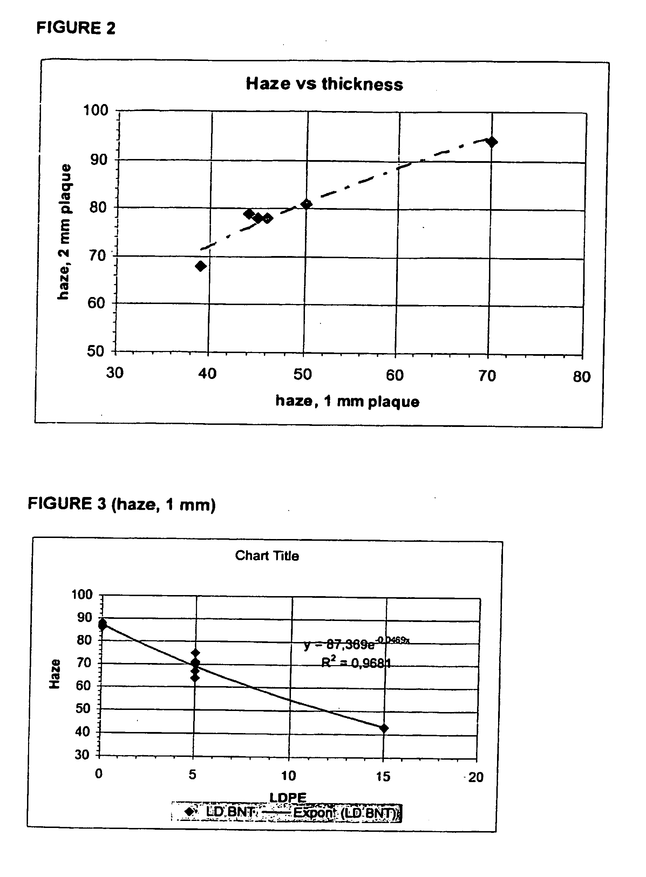

Figure 2 shows the relationship between haze and thickness for further examples. Figure 3 shows the results of haze measurements (injection moulded plaques having thickness of 1 mm) of the examples and comparative examples as contained in the application.

**Detailed description of the invention**

As defined in claim 1, the polyolefin composition in accordance with the present invention contains three essential components, a heterophasic propylene copolymer, a polymeric nucleating agent and low-density polyethylene having a density of 910 to 940 kg/m$^3$. These essential components of the present invention are explained in detail below, together with further embodiments of the present invention, processes for preparing the polyolefin composition as well as processes for preparing the components of the polyolefin composition of the present invention and the method and use as defined in the claims.

**Heterophasic propylene copolymer**

The polyolefin composition in accordance with the present invention comprises at least 80 wt% (based on the total polyolefin composition) of a heterophasic propylene copolymer. In embodiments, the heterophasic propylene copolymer is contained in the polyolefin composition in accordance with the present invention in amounts of at least 85 wt%, at least 90 wt% and, in particular, about 95 wt%. Suitable upper limits for the content of the heterophasic propylene copolymer are 99.8 wt% and in other embodiments 96 wt% and, in particular, about 95 wt%. Accordingly, the present invention contemplates contents of heterophasic propylene copolymer in the polyolefin composition of the present invention in a range of from 80 to 99.8 wt%, and in embodiments from 85 to 96 wt%, from 90 to 96 wt% and in other embodiments about 95 wt%.

The term "heterophasic propylene copolymer" as employed in the present application defines a copolymer comprising a matrix phase and a dispersed phase. The matrix phase usually comprises from about 75 to 95 wt% of the heterophasic propylene copolymer while the dispersed phase amounts to 5 to 25 wt% of the heterophasic propylene copolymer. The heterophasic propylene copolymer to be employed in accordance with the present invention may be any suitable and conventional heterophasic propylene copolymer known to the skilled person. The skilled person is readily aware of how such bimodal or multimodal propylene copolymer components can be obtained, for example by mechanical blending including mixing and melt blending processes and any combinations thereof as well as in-situ blending during the polymerisation process of the propylene polymer component(s), or any combination of mechanical and in-situ blending.

Such heterophasic propylene copolymers may be prepared in any known manner, including sequential polymerization reactions, wherein the components are blended together in-situ during their preparation process, the above mentioned mechanical blending processes as well as a combination of in-situ blending and mechanical blending. Sequential polymerisation reactions are preferred for preparing the heterophasic propylene copolymer to be employed in the present invention.

The modality of the matrix phase with respect to molecular weight distribution and thus with respect to melt flow ratio is not critical. Thus the polypropylene matrix phase in accordance with the present invention may be unimodal or multimodal including bimodal with respect to molecular weight distribution. The polypropylene matrix phase of the invention may also be multimodal with respect to comonomer distribution.

The heterophasic propylene copolymer to be employed in accordance with the present invention may thus comprise a matrix phase comprising only one propylene polymer component or the matrix phase may comprise more than one propylene polymer, such as two, three or four different propylene polymers. In preferred embodiments, the matrix phase comprises at least two propylene polymer components.

The matrix phase usually comprises at least one propylene homopolymer or a propylene copolymer and/or a further propylene copolymer. Preferably, the matrix phase comprises at least two propylene polymer components, preferably either (i) a propylene homopolymer or a propylene random copolymer in combination with (ii) a propylene random copolymer. The propylene polymer components for the matrix phase may be combined in any suitable manner, preferably, by preparing the matrix phase as in-situ reactor blend, i.e. by preparing the different components of the matrix phase during subsequent polymerization steps in suitable reactor arrangements. Alternatively, the matrix phase may be combined by mechanical (melt) blending different propylene polymer components.

By the term "random copolymer" is meant herein that the comonomer in said copolymer is distributed randomly, i.e. by statistical insertion of the comonomer units, within the copolymer chain. Said term "random" copolymer is generally known and used in the art and abbreviated herein below as "polypropylene copolymer".

Likewise, the dispersed phase, i.e. the elastomeric rubber phase, may comprise one suitable elastomeric copolymer or more than one, such as two, three or four. In preferred embodiments, the heterophasic propylene copolymer to be employed in accordance with the present invention comprises a dispersed phase comprising one elastomeric rubbery polymer phase. Suitable and preferred embodiments of the heterophasic propylene copolymer are discussed in the following.

The matrix phase of the heterophasic propylene copolymer to be used in accordance with the present invention furthermore is characterized in that it comprises up to 10 weight% of ethylene and/or at least one $C_4$-$C_8$ $\alpha$-olefin. In case of ethylene as a comonomer, the matrix phase of the heterophasic propylene copolymer comprises 1 to 10 weight% (wt%), preferably amounts to up to 6 wt%, for example 1 to 6 wt%, or 2 to 5.5 wt%, of ethylene based on the total weight of the matrix component. In case of $C_4$-$C_8$ $\alpha$-olefin, the matrix phase comprises preferably 2 to 8 mol% or 3 to 7 mol% of $C_4$-$C_8$ $\alpha$-olefin. Preferably, the matrix phase of the heterophasic propylene copolymer comprises, in addition to propylene, only ethylene as further matrix component.

Concerning components (i) and (ii) of the matrix phase, it furthermore is preferred when component (i) has a lower xylene soluble fraction than component (ii). Generally, stiffness is lowered and impact strength is increased with increasing the fraction of xylene soluble in component (ii).

When the component (i) of the matrix component of the heterophasic propylene copolymer in accordance with one preferred embodiment of the present invention is a propylene copolymer, it is preferred that the ethylene amount of component (i) is not more than 4 wt%, preferably 1.5 to 2 wt%, based on the total ethylene amount of the matrix component of the heterophasic propylene copolymer.

By adjusting the ethylene content in the random copolymer (ii), it is possible to tailor stiffness (tensile modulus) properties and also impact (charpy) properties. Higher ethylene contents generally lower stiffness and increase impact properties, in particular when the ethylene content of the random copolymer exceeds 7 wt%.

The matrix phase of the heterophasic propylene copolymer may be unimodal or multimodal, i.e. the different components of the matrix phase may either show similar molecular weight distributions or different molecular weight distributions (and accordingly also $MFR_2$ values). Herein the term "Multimodal" includes bimodal molecular weight distribution. It is preferred when the matrix phase of the heterophasic propylene copolymer has at least bimodal molecular weight distribution. Such a preferred embodiment can be realized by providing a matrix phase having a broad molecular weight distribution and comprising the at least two propylene polymer components (i) and (ii) with different weight average molecular weights (MW) and, thus, with different melt flow r atios ($MFR_2$). Such an embodiment may be exemplified by a mixture of a lower molecular weight component with a higher molecular weight component. The lower molecular weight (LMW) component has a higher $MFR_2$ than the higher molecular weight (HMW) component. In embodiments, the LMW component is the at least one component (i) while the HMW component is the at least one component (ii). In embodiments, this order, however, may also be reversed. As outlined above, it is preferred when the matrix phase of the heterophasic propylene copolymer is bimodal, comprising a LMW component and a HMW component. The amount of the LMW component is typically between 30 to 70 wt%, preferably 40 to 60 wt% of the total amount of the matrix phase. The amount of the HMW component is typically between 30 to 70 wt%, preferably 40 to 60 wt% of the total amount of the matrix phase.

In embodiments, the ratio ($MFR_2$ of LMW component) to ($MFR_2$ of HMW component) is typically at least 3, preferably at least 4, more preferably at least 10, and in some end applications even at least 15 is desired. The upper limit of said ratio may be up to 200, preferably up to 100.

In embodiments, it is also preferred when the matrix phase of the heterophasic propylene copolymer is multimodal, including bimodal, with respect to the comonomer distribution. In accordance with the present invention this means a different comonomer content (weight percent) between the components of the matrix phase, i.e. components (i) and (ii) of the matrix component. As outlined above, the matrix component preferably comprises at least two different propylene polymer components, i.e. at least one component in accordance with definition (i) and at least one component in accordance with definition (ii). However, the matrix component may comprise more than one component of each of the components (i) and (ii) as defined above. At least one of components (i) and (ii) is a copolymer. In case of two different comonomer components (i) and (ii), the comonomer content and/or the type of comonomer may differ. Thus also any mixtures of propylene with different comonomer of at least one copolymer component of the matrix are covered herein.

In embodiments it is preferred when the components (i) and (ii) differ with respect to their comonomer content and it is preferred when the comonomer content of (i) is lower than the comonomer content of (ii).

The matrix phase in accordance with the present invention preferably shows an $MFR_2$ (ISO 1133, at 230°C, 2,16 kg load) of from 0.5 to 50 g/10 min, such as from 5 to 30 g/10 min and in embodiments from 7 to 20 g/10 min.

The heterophasic propylene copolymer to be employed in accordance with the present invention furthermore comprises a dispersed elastomeric rubber phase. This dispersed phase (rubber phase) makes up to 25 wt% of the total weight of the heterophasic propylene copolymer. Suitable ranges are 5 to 25 wt% and in embodiments also 10 to 15 wt%.

The dispersed phase comprises an elastomeric copolymer of propylene and one or more olefin comonomer, comprising from 20 to 80 wt% of olefin comonomer. The olefin comonomer is preferably ethylene and/or $C_4$-$C_8$ alpha-olefin. Suitable amounts of ethylene or $C_4$-$C_8$ alpha-olefin in the elastomeric propylene copolymer are accordingly 20 to 80 wt%, 25 to 50 wt% or 30 to 40 wt% of ethylene or $C_4$-$C_8$ alpha-olefin, or any mixture thereof. Preferably the comonomer is ethylene. The dispersed phase includes also terpolymers of propylene and two different olefin comonomers, such as with ethylene and a $C_4$-$C_8$ alpha-olefin. In case of two or more comonomers the total amount of comonomer is preferably as given above for individual comonomers.

According to a preferred embodiment of the present invention, the dispersed phase, i.e. the ethylene rubber copolymer is an ethylene propylene rubber (EPR). EPR materials are more cost-effective than rubbers with higher $\alpha$-olefins and they can either be synthesized in a final step of a multi-step process, where the first steps synthesize the matrix polymer, or they can be mechanically blended with the matrix polymer in a separate melt blending step.

In embodiments of the present invention the intrinsic viscosity of the dispersed phase is preferably equal to or smaller then the intrinsic viscosity of the matrix phase. Such an embodiment may lead to an improvement of the dispersion of the dispersed phase in the matrix phase. In accordance with such an embodiment it is in particular preferred when the $MFR_2$ of matrix phase of the heterophasic propylene copolymer is from 0.5 to 1.2 times the overall $MFR_2$ of the heterophasic propylene copolymer.

The heterophasic propylene copolymer as disclosed above suitably displays an intrinsic viscosity (IV) of the xylene soluble fraction (XS) of 2.5 dl/g or less, with a preferred lower limit of 1 dl/g. A suitable range, for example, is 1.3 to 2 dl/g. The total xylene soluble fraction of the heterophasic propylene copolymer suitably amounts up to 60 wt% of the heterophasic propylene copolymer, for example, 5 to 60 wt%, in embodiments 7 to 60 wt% and in other embodiments 7 to 40 wt%, 7 to 30 wt% or 12 to 40 wt%. The xylene soluble fraction of the matrix phase amounts up to 35 wt%, and in embodiments 2 to 5 wt% or 2 to 15 wt%. This value can be appropriately adjusted by measures known to the skilled person in the art depending on the desired end application. The xylene soluble fraction of the dispersed phase amounts up to 25 wt%, in embodiments 5 to 25 wt%, and also 10 to 25 wt%.

As outlined above, the heterophasic propylene copolymer to be employed in accordance with the present invention may be prepared in any suitable manner known to the skilled person in the art, including mechanical blending processes as well as, preferably, sequential polymerization processes. In this respect, it is a Iso possible to prepare the matrix phase by suitable sequential polymerization processes, while the dispersed phase then can either be introduced by blending processes or by a further polymerization carried out in the presence of the already polymerized matrix phase.

According to a preferred embodiment of the present invention, the heterophasic propylene copolymer is a reactor made heterophasic propylene polymer. Reactor made heterophasic propylene copolymer means herein a reaction product which is obtained from a polymerization reaction sequentially polymerizing the different components of the heterophasic propylene copolymer. In this respect, any polymerization method, including solution, slurry and bulk polymerization or gas phase polymerization can be used, in any desired order. Bulk polymerization defines in the present application a polymerization in a reaction medium comprising at least 60 wt% monomer.

In the following, a preferred process for preparing first the matrix phase of the heterophasic propylene copolymer is described, followed by a description of a further preferred embodiment also including the preparation of the dispersed phase.

When the matrix is unimodal with respect to the molecular weight distribution and comonomer distribution, it may be prepared in a single stage process e.g. as slurry or gas phase process in a slurry or gas phase reactor. Preferably, the unimodal matrix is polymerised as a slurry polymerisation. Alternatively, the unimodal matrix may be produced in a multistage process using at each stage process conditions which result in similar polymer properties.

The matrix phase of the heterophasic propylene copolymer to be used in accordance with the present invention, comprises preferably components (i) and (ii) as defined above may be prepared by polymerizing, in a slurry reactor, for example a loop reactor, propylene monomers optionally together with one or more comonomers, in the presence of a polymerization catalyst to produce component (i) of the matrix phase of the heterophasic propylene copolymer. This component (i) is then transferred to a subsequent gas phase reactor, wherein in the gas phase reactor propylene monomers are reacted in the presence of suitably selected comonomers in order to produce component (ii) in the presence of the reaction product of the first step. This reaction sequence provides a reactor blend of components (i) and (ii) constituting the matrix phase of the heterophasic propylene copolymer. It is of course possible by the present invention that the first reaction is carried out in a gas phase reactor while the second polymerization reaction is carried out in a slurry reactor, for example a loop reactor. It is furthermore also possible to reverse the order of producing components (i) and (ii), which has been described above in the order of first producing component (i) and then producing component (ii). The above-discussed process, comprising at least two polymerization steps, is advantageous in view of the fact that it provides easily controllable reaction steps enabling the preparation of a desired reactor blend of the matrix phase of the heterophasic propylene copolymer. The polymerization steps may be adjusted, for example by appropriately selecting monomer feed, comonomer feed, hydrogen feed, temperature and pressure in order to suitably adjust the properties of the polymerization products obtained. It is in particular possible to obtain the preferred multimodality, preferably the bimodality, of the matrix phase of the heterophasic propylene copolymer, with respect to the ethylene distribution as well as with respect to the molecular weights and $MFR_2$ values of the matrix phase components during said multistage polymerization procedures.

Such a process can be carried out using any suitable catalyst for the preparation of propylene monomers, including. Preferably, the process as discussed above is carried out using a Ziegler-Natta catalyst, in particular a high yield Ziegler-Natta catalyst (so called fourth a nd fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl biased compound. Suitable catalysts are in particular disclosed in US 5,234,879, WO 92/19653, WO 92/19658 and WO 99/33843, incorporated herein by reference.

A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0887379 A1 and WO 92/12182, incorporated herein by reference.

With respect to the above-mentioned preferred slurry-gas phase process, the following general information can be provided with respect to the process conditions.

Temperature of from 40°C to 110°C, preferably between 60°C and 100°C, in particular between 70°C and 90°C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the matrix phase produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

In accordance with a further preferred embodiment of the present invention, the matrix phase produced in accordance with the preferred process discussed above is then transferred into a further reactor, preferably a gas phase reactor in order to polymerize an elastomeric propylene copolymer component, i.e. the dispersed phase, in the presence of the matrix phase.

A reactor blend comprising the matrix phase and the dispersed phase obtained with such a multistage polymerization process, preferably comprising a first slurry polymerization followed by at least two gas phase polymerization, is a preferred heterophasic propylene copolymer to be employed in accordance with the present invention. The process, e.g. comonomer content and MFR, are controlled in a known manner.

**Polymeric nucleating agent**

The polyolefin composition in accordance with the present invention furthermore comprises a polymeric nucleating agent. Any polymeric nucleating agent may be employed in accordance with the present invention, preferably vinyl cycloalkanes and/or vinyl alkanes.

Suitable examples of such a polymeric nucleating agent is a vinyl polymer, such as a vinyl polymer derived from monomers of the formula

$$CH_2 = CH\text{-}CHR_1R_2$$

wherein $R_1$ and $R_2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30alkane, C4-C20cycloalkane or C4-C20aromatic ring. Preferably, $R_1$ and $R_2$ together with the C-atom they are attached to form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are, in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The polymeric nucleating agent usually is present in the final product of the present invention in amounts more than 15 ppm (based on the weight of the polypropylene composition), such as from 15 to 1000 ppm, suitably in amounts of more than 20 ppm, preferably 20 to 700 ppm, more preferably 20 to 400 ppm, for example 30 to 350 ppm, based on the weight the heterophasic propylene copolymer. It is also possible that the polymeric nucleating agent is present in the final product in a range of from 20 to 800 ppm, more preferably in an amount of more than 50 ppm, such as 100 to 600 ppm, depending on the end use application and i.a. on the transparency desired.

The polymeric nucleating agent to be employed in accordance with the present invention may be introduced into the polyolefin composition of the present invention by any suitable means, for example by mechanical blending processes using master batches of nucleating agent in a suitable polymer.

In a preferable embodiment of the polypropylene composition of the present invention by sequential polymerization processes, wherein the single components of the polypropylene composition are prepared, one after the other, in the presence of the already prepared components. Such a process for preparing the polypropylene composition is preferred and yields a reactor blend or reactor made polymer composition, which means herein the reaction product obtained from a polymerization reaction wherein, for example, the heterophasic propylene copolymer component is polymerized in the presence of the polymeric nucleating agent.

The reactor made polymer composition (in-situ blend) defines a different embodiment compared to a mechanical blend of a polymer with a nucleating agent, wherein the polymer is first produced in the absence of a polymeric nucleating agent and is then blended mechanically with the polymeric nucleating agent or with a small amount of nucleated polymer (so-called master batch technology) in order to introduce the polymeric nucleating agent into the polymer mixture. The preparation of a reactor made polymer composition ensures the preparation of a homogenous mixture of the components, for example a homogenously distributed polymeric nucleating agent in the polypropylene composition, even at high concentrations of polymer nucleating agent. As outlined above, the reactor made polymer composition is a preferred embodiment of the present invention, although also mechanical blends prepared, for example, by using master batch technology are envisaged by the present invention.

Thus preferably, the nucleating agent is introduced into the polyolefin composition of the present invention during the polymerization of the heterophasic propylene copolymer, either by introducing into the polymerization reaction an already prepared polymeric nucleating agent as a separate agent or by introducing the polymeric nucleating agent, in particular a vinyl cycloalkane, in particular vinyl cyclohexane, to together with the catalyst for the preparation of the heterophasic propylene composition.

Thus in a further preferred embodiment of the present invention, the polymeric nucleating agent is introduced into the polypropylene composition by means of a suitably modified catalyst, i.e. the catalyst to be used in catalysing the polymerisation of the propylene copolymer is subjected to a polymerisation of a suitable monomer for the polymeric nucleating a gent to produce first said polymeric nucleating agent. The catalyst is then introduced together with the obtained polymeric nucleating agent to the actual polymerisation step of the propylene copolymer component(s).

In a particularly preferred embodiment of the present invention, the heterophasic propylene copolymer is prepared in the presence of such a modified catalyst to obtain said reactor made propypropylene composition. With such modified catalyst, it is thus possible to carry out the above-identified polymerization sequence for the preparation of in-situ blended multimodal, including bimodal, propylene random copolymers (= matrix components) and/or elastomeric propylene copolymer (=dispersed phase).

By appropriately selecting the ratio of catalyst to monomer for the polymeric nucleating agent, it is possible to tailor the amount of nucleating agent introduced into the heterophasic propylene composition. The introduction of the polymeric nucleating agent into the polyolefin composition of the present invention by means of using a prepolymerization step of the catalyst for the preparation of the heterophasic propylene composition with a suitable vinyl cycloalkane monomer is particular preferred in view of the fact that such a process enables a very good and even distribution of nucleating agent throughout the matrix phase of the heterophasic propylene composition, so that satisfactory nucleating effects are obtained with lesser amounts of nucleating agent, compared with melt blending processes employing master batches of nucleating agent in a suitable polymer.

Accordingly, a preferred polyolefin composition in accordance with the present invention accordingly is obtainable by preparing the heterophasic propylene copolymer in the presence of a modified catalyst, wherein the modified catalyst is obtainable by polymerizing a vinyl compound having the formula

$$CH_2 = CH\text{-}CHR_1R_2$$

wherein $R_1$ and $R_2$ are as defined previously herein, at a weight ratio of the vinyl compound to polymerization catalyst of two or more, in the presence of said catalyst, until the concentration of unreacted vinyl compound is less than about 0.5 wt%, preferably less than 0.1wt% (=modification step).

In this respect, the present invention furthermore provides a catalyst, suitable for the preparation of the heterophasic propylene copolymer, wherein the polymerization catalyst is obtainable by polymerizing a vinyl compound of the formula

$$CH_2 = CH\text{-}CHR_1R_2$$

wherein $R_1$ and $R_2$ are as defined herein, at a weight ratio of the vinyl compound to polymerization catalyst amounting to 2 or more, in the presence of said catalyst, until the concentration of unreacted vinyl compound is less than about 0.5 wt%.

The preferred embodiments as described previously in the present application with respect to the vinyl compound also apply with respect to the polymerization catalyst of the present invention.

Suitable reaction conditions for the modification of a polymerization catalyst with a vinyl compound are as defined in the two above-mentioned international publications, i.e. WO 99/24478, WO 99/24478, and particularly WO 00/68315 which are incorporated in that respect herein.

The weight ratio of vinyl compound to polymerization catalyst in the modification step of the polymerization catalyst preferably is of 0.8 or more, more preferably of 0.8 to 2. In another embodiment higher amounts of the polymeric nucleation agent may be desired in some applications for further increasing the transparency, e.g. weight ratio of vinyl compound to polymerization catalyst of 2 or more, preferably of 3 or more, such as of 3.5 to 15. In some applications with higher transparency requirements even ssaid ratio may amount (vinyl compound:polymerisation catalyst) of 4.0 to 40, such as 5.0 to 15, may be desired.

Suitable catalysts which may be modified as outlined above are in particular Ziegler Natta catalysts, and in this respect reference is made to the above discussion. The preferred embodiments outlined there also apply concerning the modified catalyst of the present invention.

## Low-density polyethylene

The polyolefin composition in accordance with the present invention furthermore comprises a low density polyethylene component. A low density polyethylene to be employed in accordance with the present invention comprises herein low density polyethylene obtained by high pressure polymerization reactions, commonly designated LDPE, as well as linear low density polyethylene obtained by a low pressure polymerization reaction, commonly designated LLDPE. The catalyst useful for preparing LLDPE can be any coordination catalyst for polyethylene polymerisation, such as Ziegler Natta, Chromium or single site including metallocenes and non-metallocenes LDPE, however, is the preferred low density polyethylene component to be employed in accordance with the present invention. LDPE can be prepared by high-pressure autoclave or tubular reactor. LDPE and LLDPE are well known and documented polyethylene polymers.

A suitable low-density polyethylene to be employed in accordance with the present invention is a low density polyethylene having an $MFR_2$ (ISO 1133, at 190°C at 2.16 kg loading) value of from 0.5 to 30, preferably 3 to 15, and in particular 4 to 10.

The density of the low-density polyethylene to be employed in accordance with the present invention is from 910 to 940 kg/m$^3$, and in embodiments suitable densities for LDPE are also 910 to 925 kg/m3. The low-density polyethylene is used in the polyolefin composition in accordance with the present invention in an amount of up to 20 wt% of the total polyolefin composition. In embodiments, the polyolefin composition of the present invention comprises from 1 to 20 wt% low density polyethylene, suitable amounts furthermore are 2 to 15 wt% as well as 5 to 15 wt%, based on the total weight of the polyolefin composition comprising the components as defined in claim 1.

In embodiments, the amount of low density polyethylene is selected so that the amount of low density polyethylene corresponds to the amount of the xylene soluble fraction of the dispersed phase of the heterophasic propylene copolymer. In accordance with this embodiment in accordance with the present invention, the weight ratio of low density polyethylene to xylene soluble fraction of the dispersed phase is within the range of from 2:1 to 1:2, more preferably 1.5:1 to 1:1.5, and in particular preferably about 1:1. In other embodiments, however, the weight ratio of low density polyethylene to xylene soluble fraction in the dispersed phase is adjusted to values ranging from 1:2 to 1:6, such as illustrated in Examples 1 to 5, wherein the weight ratio of low density polyethylene to xylene soluble fraction in the dispersed phase is below 0.5, in particular lower than 0.45, and in embodiments as low as 0.20.

The low density polyethylene component to be employed in the polyolefin composition in accordance with the present invention preferably is blended mechanically with the other polyolefin composition components using suitable and well-known blending steps, such mixing and melting steps and any combinations thereof.

The low density component in a form of powder or pellets is typically blended together or separately with the additives to the heterophasic polypropylene component(s) containing the polymeric nucleating agent, preferably to the reactor made heterophasic polypropylene component, which can also be in the form of powder or pellets. The obtained mixture is preferably mixed followed by melt mixing, preferably using standard polymer processing equipment, such as single- or preferably twin-screw extruders. The processing conditions are selected in a known manner in accordance with the properties of the components of the polyolefin composition in order to enable a sufficient mixing of the components without giving rise to degradation reactions due to temperatures or pressures being too high.

**Final polyolefin composition in accordance with the present invention**

The polyolefin composition in accordance with the present invention, comprising the essential components as defined above, surprisingly displays an improved haze value, compared with a polyolefin composition not comprising the low density polyethylene component. The examples as contained in the present application clearly show that the addition of 5 wt% low density polyethylene increases the haze values of a nucleated heterophasic propylene composition from values of about 90% (no transparency) to values as low as 75 to 65%.

Generally, the transparency can be increased by increasing the amount of linear lo density polyethylene. The optical properties of the polyolefin composition of the invention can thus be further optimised by adjusting the amount of low density polyethylene component.

In one preferable embodiment, the difference between the haze value of a polyolefin composition of the invention, comprising the heterophasic copolymer component, nucleating agent and low density polyethylene component, and a the same polyolefin composition without the low density polyethylene component is of at least 10%, preferably at least 15%.

In one preferable embodiment the haze of the final polyolefin composition of the invention, comprising low density polyethylene component in an amount up to 20 wt%, corresponds to the following relationship

$$\text{HAZE (1 mm thickness)} \leq 88 \cdot e^{(-0.033X)} \%,$$

wherein X = amount of low density polyethyelene in the final composition, wt% (e is the base of the natural logarithm, i.e. approx. 2.718).

Furthermore, it furthermore has been discovered that the addition of low density polyethylene also improves the impact properties of the polyolefin composition, as evidenced in the examples as contained in the present specification (values for charpy, notched at room temperature and at -20°C).

The invention thus provides a further, very advantageous alternative for improving the transparency without using low molecular weight nucleating agents. This may be highly beneficial e.g. in medical and food applications with strict requirements for purity of the material.

Accordingly, the present invention provides an alternative method for improving transparency of a heterophasic, polymer nucleated propylene copolymer. The present invention furthermore also provides an advantageous property balance of transparency, impact and stiffness.

The preferred embodiments as outlined above in connection with the polyolefin composition in accordance with the present invention also apply with respect to the method and use as defined herein.

The polyolefin compositions in accordance with the present invention may be employed suitably for the known applications for polyolefin compositions, in particular polyolefin compositions comprising heterophasic propylene copolymers. Suitable end uses are in particular moulding and film applications, for example obtained by converting the polyolefin composition in accordance with the present invention by thermoforming processes. Suitable end products may accordingly be used in the packaging industry, for deep-freeze applications, such as cups, trays, lids etc. any other application, however, is also envisaged by the present application, in particular end applications wherein the improved properties of the polyolefin composition in accordance with the present invention may suitably be employed.

The polyolefin composition of the present invention may in particular be used for the manufacture of moulded and extruded articles, in particular articles produced by injection moulding, compression moulding, thermoforming, blow moulding or foaming. The polyolefin composition of the present invention is suitable for preparing sheets or films as well as cups, pails, bottles, containers, boxes, automotive parts, appliances, technical articles, caps, closures, lids, pipes, tubes, cables etc.

As stated above the polyolefin composition of the present invention, in the form of powder, fluff, spheres, pellets etc. may be melt blended, compounded and pelletised with additives, fillers conventionally used in the art. Suitable additives include antioxidants, acid scavengers, antistatic agents, light and heat stabilisers, lubricants, nucleating agents, clarifying agents, pigments and other colouring agents, In some applications fillers, particularly small amounts of nanofillers may also be used.

**Definitions and determination methods used in the** claims, **above description and below examples**

**The xylene soluble fraction (XS)** as defined and described in the present invention is determined as follows: 2.0 g of polymer are dissolved in 250 mm p-xylene at 135°C under agitation. After $30\pm$ minutes, the solution was allowed to cool for 15 minutes at ambient temperature and then allowed to settle for 30 minutes at $25\pm 0.5$°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 2 00 ml of acetone under vigorous stirring. The precipitate was filtered and dried in a vacuum oven at 90°C. This solution can be employed in order to determine the amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

**The intrinsic viscosity (IV)** value is increasing with the molecular weight of a polymer. IV of AM: measured according to ISO 1628.

**$MFR_2$**: unless otherwise specified is measured $MFR_2$ in accordance with ISO 1133 (230°C, 2.16 kg load).

**$MFR_2$**: in case of low density polyethylene component as defined above, $MFR_2$ is determined according to ISO 1133 at 190°C at 2.16 kg loading.

**Comonomer content** (weight percent) is determined in a known manner based on FTIR, calibrated with C13NMR.

Multimodality including bimodality with respect to the comonomer distribution can be demonstrated using the results of the analysis with respect to the comonomer content. Modality with respect to the molecular weight distribution can be determined in a usual manner employing size exclusion chromatography (SEC).

**Melting temperature, crystallization temperature and degree of crystallinity** are measured with a Mettler TA820 differential scanning colorimetry device (DSC) on $3\pm 0.5$ mg samples. Crystallization and melting temperatures are obtained during 10°C/min cooling and heating scans between 30°C and 225°C. Melting and crystallization temperatures were taken as the peaks of endotherms and exotherms. The degree of crystallinity is calculated by comparison with the heat or fusion of a perfectly crystalline polypropylene, i.e. 209 J/g.

**Instrumental falling weight impact (IFWI)** is measured according to ISO 6603-2 using 2 mm injection moulded plaques with a diameter of 60 mm.

**Charpy notched impact** is measured according to ISO 179 (room temperature, if not otherwise mentioned) and at -20°C using injection molded test specimen as described in EN ISO 1873-2 (80 x 10 x 4 mm).

**Tensile strength,** including **tensile stress at yield and strain at yield,** is measured according to ISO 572-2 (cross head speed 50 mm/min). Tensile modulus is measured according to ISO 572-2 (cross head speed 1 mm/min).

**Haze and transparency** are determined from 1 mm (or 2 mm when specified) injection molded plaque samples according to ASTMD 1003.

**Examples**

The examples of the invention as summarized in the tables below were prepared by melt blending of low density polyethylene in a conventional compounding device in a known manner using twin screw extruder (machine: Berstorff) having 25 mm screw, length/diameter (UD) of 25 and melt temperature of 220C°. Low density polyethylene, LDPE, components used in the examples were commercially available film grades, produced in a conventional manner in High Pressure autoclave. LDPE's are indicated in the table 2: LDPE1 which had $MFR_2$ (190°C, 2.16 kg load) of 4 g/10 min and density of 922 kg/m$^3$, LDPE2 had $MFR_2$ (190°C, 2.16 kg load) of 15 g/10 min and density of 915 kg/m$^3$. Nucleated heterophasic propylene copolymers were prepared as outlined below. The comparative examples were made from the same matrix material, but without adding any low density polyethylene.

The heterophasic propylene copolymer is prepared in a continuous multistage process on a pilot scale plant comprising a loop reactor and fluidized bed gas phase reactors. The catalyst employed is a known, highly active stereo-ospecific transesterified magnesium chloride supported Ziegler-Natta catalyst prepared as described in WO 99/24479 except that the weight ratio of vinyl cyclohexane (VCH) to catalyst was 1:1 and that the catalyst was contacted with triethyl aluminum (TEAl) as co-catalyst and an external donor (dicyclopentyl dimethoxysilane) with an Al/donor mole ratio of 7. The catalyst is further characterized in the tables below. The catalyst is prepolymerized in a normal manner in the presence of propylene and the co-catalyst in a separate prepolymerization step. Then, propylene and hydrogen are fed together with the activated catalyst into the loop reactor which operated as a bulk reactor at conditions as given in the tables below (production of loop fraction). Then, the polymer slurry stream was fed from the loop reactor into the gas phase reactor and more propylene, ethylene and hydrogen were fed in the gas phase reactor (production of the gas phase reactor fraction in the presence of the loop fraction to obtain the matrix component). The polymerization conditions are given in the tables below. The rubber phase (dispersed phase) was produced with a $C_2/C_3$ ratio varying between 400 and 800 mol/kmol, as specified in the table below. Intrinsic viscosity was adjusted with the hydrogen feed. The concentration of the PVCH nucleating agent in the resulting polymer product was 50 ppm.

The tables below define the reaction parameters of the polymerisation (Table 1) as well as the product properties of the reaction product as well as of the blend with low-density polyethylene (Table 2).

**Table 1**

|  | PP1 | PP2 | PP3 | PP4 | PP5 |
|---|---|---|---|---|---|
| Polymer type | PP-h-r-b | PP-h-r-b | PP-h-r-b | PP-h-r-b | PP-h-r-b |
| **Catalyst and Polym. Cond.** |  |  |  |  |  |
| Donor type | Dicyclopentyl dimethoxy | Dicyclopentyl dimethoxy | Dicyclopentyl dimethoxy | Dicyclopentyl dimethoxy | Dicyclopentyl dimethoxy |
| Al/donor ratio (mol/mol) | 7 | 7 | 7 | 7 | 7 |
| Prepol. T (°C) | 30 | 30 | 30 | 30 | 30 |
| Loop T (°C) | 80 | 80 | 80 | 80 | 80 |
| Pressure (kPa) | 5410 | 5410 | 5400 | 5410 | 5350 |
| $H_2$ feed (g/h) | 30 | 29 | 27 | 29 | 31 |
| Split (wt%) | 54 | 60 | 49 | 49 | 47 |
| **Loop component of matrix** |  |  |  |  |  |
| $MFR_2$ (230°C) g/10min | 8.6 | 8.6 | 8.9 | 9.4 | 10.6 |
| XS (wt%) | 1.6 | 1.6 | 1.6 | 1.4 | 1.2 |
| **GPR1 T (°C)** | 85 | 85 | 85 | 85 | 85 |
| Pressure (kPa) | 2950 | 2950 | 2580 | 2480 | 2650 |
| $H_2/C_3$ ratio (mol/kmol) | 52 | 53 | 73 | 82 | 112 |
| $C_2/C_3$ ratio (mol/kmol) | 36 | 36 | 64 | 65 | 80 |

(continued)

| | PP1 | PP2 | PP3 | PP4 | PP5 |
|---|---|---|---|---|---|
| Split (wt%) | 46 | 40 | 51 | 51 | 54 |
| **Total matrix component (loop+GPR)** | | | | | |
| MFR$_2$ (230°C) g/10min | 8.8 | 8.8 | 9.3 | 10.5 | 12.6 |
| XS (wt%) | 3.1 | 3.1 | 10.5 | 11.8 | 32.7 |
| Ethylene content (wt%) | 2.2 | 2.1 | 3.5 | 3.4 | 5.1 |
| **GPR2 T (°C)** | 70 | 70 | 70 | 80 | 80 |
| Pressure (kPA) | 3100 | 3100 | 3100 | 3100 | 3100 |
| H$_2$/C$_2$ ratio (mol/kmol) | 500 | 490 | 490 | 390 | 410 |
| C$_2$/C$_3$ ratio (mol/kmol) | 480 | 490 | 470 | 570 | 480 |
| Split (wt%) | 12 | 14 | 16 | 25 | 15 |
| **Final heterophasic PP copolymer (matrix + dispersed phase)** | | | | | |
| MFR$_2$ (230°C) g/10min powder | 7.3 | 7.0 | 7.3 | 6.7 | 7.4 |
| XS (wt%) | 14.9 | 17.2 | 23.7 | 33.9 | 42.4 |
| AM (wt%) | 13.5 | 15.1 | 22.5 | 32.8 | 43.7 |
| Viscosity of AM (dl/g) | 1.6 | 1.5 | 1.5 | 1.4 | 1.4 |
| Total ethylene content (wt%) | 7.1 | 6.6 | 8.2 | 13.4 | 13.5 |
| | | | | | |

The obtained heterophasic propylene copolymers were compounded with the following additives (CaSt = calcium stearate) to yield stabilised pellets:

**Table 1a**

| | **PP1** | **PP2** | **PP3** | **PP4** | **PP5** |
|---|---|---|---|---|---|
| Irganox B 215 (ppm) | 1000 | 2000 | 1000 | 1000 | 1000 |
| CaSt (ppm) | 500 | 500 | 500 | 500 | 500 |
| MFR$_2$ (230°C) g/10min | 8.0 | 7.1 | 7.3 | 7.1 | 8.1 |

These compounds were then evaluated with respect to the properties as indicated in Table 2 (Comparative Examples 1 to 5); further examples were prepared by melt blending with 5 wt% of commercially LDPE (MFR4), and with 15 wt% of another LDPE (Examples 1 to 5 and 1a).

The experimental results as summarized in the tables and as further depicted in the figures clearly show that the addition of about 5 wt% LDPE decreases haze (measured with 1 mm plaques) by about 15 percentage points (compare Example 1 and Comparative Example 1). At the same time, stiffness is reduced by about 50 MPa, a decrease which can further be increased by adding additional amounts of LDPE. Example 1 a in this respect shows that with the addition of about 15 wt% LDPE a decrease in stiffness of about 200 to 250 MPa can be realized. At the same time, haze is further improved (compare Example 1 and Example 1a). At the same time, also the impact properties are improved (charpy, notched and falling weight impact), demonstrating that the advantages outlined in the general description of the present application can be obtained when carrying out the technical teaching as defined herewith. The examples therefore clearly demonstrate that the objects identified above have been solved in accordance with the teaching of the present invention.

**Table 2**

| Polymer | | Comparative Example 1 | Example 1 | Example 1a | Comparative Example 2 | Example 2 | Comparative Example 3 | Example 3 | Comparative Example 4 | Example 4 | Comparative Example 5 | Example 5 |
|---|---|---|---|---|---|---|---|---|---|---|---|---|
| | | PP1 | PP1/LDPE1 | PP1/LDPE2 | PP2 | PP2/LDPE1 | PP3 | PP3/LDPE1 | PP4 | PP4/LDPE1 | PP5 | PP5/LDPE1 |
| $MFR_2$, 230 C, 2.16 kg | g/10min | 8 | 7,7 | 8 | 7.1 | 7 | 7,3 | 7,4 | 7,1 | 7,1 | 8,1 | 7,9 |
| | | | | | | | | | | | | |
| XS, matrix | wt% | 3.1 | 3,1 | 3,1 | 3.1 | 3,1 | 10,5 | 10,5 | 11,8 | 11,8 | 32,7 | 32,7 |
| C2, matrix | wt% | 2,2 | 2,2 | 2,2 | 2,1 | 2,1 | 3,5 | 3,5 | 3,4 | 3,4 | 5,1 | 5,1 |
| | | | | | | | | | | | | |
| Ethene (total copolymer blend) | w% | 7,5 | 12,6 | - | 7,3 | 11,7 | 8,6 | 12,9 | 14,1 | 19 | 14,2 | 18,5 |
| | | | | | | | | | | | | |
| XS total (matrix + rubber) | wt% | 14,9 | 14,9 | 14,9 | 17,2 | 17,2 | 23,7 | 23,7 | 33,9 | 33,9 | 43 | 43 |
| IV of AM | dl/g | 1,6 | 1,6 | 1,6 | 1,5 | 1,5 | 1,5 | 1,5 | 1,4 | 1,4 | 1,4 | 1,4 |
| XS rubber calculated) | | 12,2 | 12,2 | 12,2 | 14 | 14 | 14,2 | 14,2 | 24,3 | 24,3 | 14 | 14 |

EP 1 801 156 B1

14

(continued)

| Polymer | | Comparative Example 1 | Example 1 | Example 1a | Comparative Example 2 | Example 2 | Comparative Example 3 | Example 3 | Comparative Example 4 | Example 4 | Comparative Example 5 | Example 5 |
|---|---|---|---|---|---|---|---|---|---|---|---|---|
| | | PP1 | PP1/LDPE1 | PP1/LDPE2 | PP2 | PP2/LDPE1 | PP3 | PP3/LDPE1 | PP4 | PP4/LDPE1 | PP5 | PP5/LDPE1 |
| Tm of PP | °C | 162,4 | 163.1 | 163.2 | 162,3 | 162,6 | 162,4 | 163,2 | 162,6 | 162,8 | 162,5 | 162,8 |
| Tcr of PP | °C | 126,5 | 126,1 | 126,4 | 126,7 | 126,5 | 127,2 | 126,5 | 127 | 126,9 | 126,7 | 126,5 |
| Tm ot PE | °C | - | 109,5 | 102,6 | - | 109,5 | - | 109 | | 109 | - | 109 |
| | | | | | | | | | | | | |
| Tensile stress at yield | MPa | 23,1 | 21,8 | 18,5 | 23,4 | 22 | 19,9 | 18.6 | 14,8 | 14 | 12,7 | 12 |
| Tensile strain at yield | % | 11,9 | 12,4 | 18 | 11,5 | 12,3 | 13,6 | 14,9 | 14,7 | 16,8 | 17,4 | 19,7 |
| Tensile modulus | MPa | 990 | 950 | 720 | 1010 | 970 | 770 | 740 | 610 | 580 | 450 | 420 |
| Charpy, notched, RT | kJ/m$^2$ | 13,4 | 18,4 | 50,9 | 14,4 | 34 | 32 | 56,2 | 60,1 | 60,9 | 63,4 | 62,5 |
| Charpy, notched, -20 C | kJ/m$^2$ | 2,4 | 2,7 | 2,4 | 2,5 | 2,5 | 2,4 | 2,6 | 5.2 | 6,6 | 6,7 | 7,6 |

| | | Comparative Example 1 | Example 1 | Example 1a | Comparative Example 2 | Example 2 | Comparative Example 3 | Example 3 | Comparative Example 4 | Example 4 | Comparative Example 5 | Example 5 |
|---|---|---|---|---|---|---|---|---|---|---|---|---|
| Polymer | | PP1 | PP1/LDPE1 | PP1/LDPE2 | PP2 | PP2/LDPE1 | PP3 | PP3/LDPE1 | PP4 | PP4/LDPE1 | PP5 | PP5/LDPE1 |
| Haze 1 mm IM plaque 2 mm IM plaque | % | 87 | 70 | (~43, calculated) 64 | 88 | 67 | 86 | 64 | 88 | 75 | 87 | 71 |
| | | | | | | | | | | | | |
| Instrumentated falling weight | | | | | | | | | | | | |
| 0C Total energy, Etot | J | 35 | 47 | - | 44 | 46 | 51 | 45 | 41 | 42 | 42 | 41 |
| type/ failure | | duct (2) d/br (8) | duct (9) d/br (1) | | duct (4) d/br (6) | ductile | ductile | ductile | ductile | ductile | ductile | ductile |
| -20 C Total energy, Etot | J | 16 | 9 | 34 | 18 | 15,5 | 16,5 | 28 | 45 | 46 | 44 | 45 |
| type/ failure | | brittle | brittle | D/br | d/br (6) br/d-br (4) | Br/d | brittle | d/br (8) br/d (2) | ductile | ductile | ductile | ductile |
| -40C Total energy, Etot | J | | | | | | | | 47 | 49 | 45 | 50 |
| type/ failure | | - | - | - | - | - | - | - | duct (7) dlbr (3) | ductile | duct (7) | ductile |

EP 1 801 156 B1

(continued)

| Polymer | | Comparative Example 1 | Example 1 | Example 1a | Comparative Example 2 | Example 2 | Comparative Example 3 | Example 3 | Comparative Example 4 | Example 4 | Comparative Example 5 | Example 5 |
|---|---|---|---|---|---|---|---|---|---|---|---|---|
| | | PP1 | PP1/LDPE1 | PP1/LDPE2 | PP2 | PP2/LDPE1 | PP3 | PP3/LDPE1 | PP4 | PP4/LDPE1 | PP5 | PP5/LDPE1 |
| LOPE1, MFR, 4 g/10 min (190°C, 2.16 kg load), density 922 kg/m$^3$ | wt% | 0 | 5 | - | 0 | 5 | 0 | 5 | 0 | 5 | d/br (3) | 5 |
| LDPE2, MFR 15 g/10 min (190°C, 2.16 kg load), density 915 (kg/m$^3$) | wt% | | | 15 | | | | | | | | |

EP 1 801 156 B1

| | | Comparative Example 1 | Example 1 | Example 1a | Comparative Example 2 | Example 2 | Comparative Example 3 | Example 3 | Comparative Example 4 | Example 4 | Comparative Example 5 | Example 5 |
|---|---|---|---|---|---|---|---|---|---|---|---|---|
| Polymer | | PP1 | PP1/LDPE1 | PP1/LDPE2 | PP2 | PP2/LDPE1 | PP3 | PP3/LDPE1 | PP4 | PP4/LDPE1 | PP5 | PP5/LDPE1 |
| duct = ductile failure d/br =ductile-brittle failure brid brittle-ductile failure br = brittle failure (2) =20%=2/10 | | | | | | | | | | | | |

EP 1 801 156 B1

**Claims**

1. Polyolefin composition, containing

   (A) at least 80 wt% of a heterophasic propylene copolymer, which comprises at least 75 to 96 wt% of a propylene random copolymer matrix phase comprising up to 10-wt% of ethylene and/or at least one $C_4$-$C_8$ $\alpha$-olefin, and up to 25 wt% of a dispersed phase comprising an elastomeric propylene copolymer with 20 to 80 wt% of an olefin comonomer, preferably ethylene and/or $C_4$-$C_8$ $\alpha$-olefin,
   (B) a polymeric nucleating agent, and
   (C) up to 20-wt% of low-density polyethylene having a density of 910 to 940 kg/m$^3$.

2. Polyolefin composition in accordance with claim 1, wherein the low-density polyethylene is LDPE.

3. Polyolefin composition in accordance with any one of claims 1 and 2, wherein the polymeric nucleating agent is selected among vinyl cycloalkane polymers and vinyl alkane polymers.

4. Polyolefin composition in accordance with any one of claims 1, 2 and 3, wherein the polymeric nucleating agent is contained in an amount of from 15 to 1000 ppm (weight), based on the weight of the heterophasic propylene copolymer.

5. Polyolefin composition in accordance with any one of claims 1 to 4, wherein the heterophasic propylene copolymer is a reactor made heterophasic propylene copolymer produced in the presence of a modified catalyst, wherein the modified catalyst is obtainable by polymerizing a vinyl compound having the formula

$$CH_2 = CH\text{-}CHR_1R_2,$$

   wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12-membered saturated or unsaturated or aromatic ring or a fused ring system or independently represent a linear or branched $C_4$-$C_{30}$alkane, $C_4$-$C_{20}$cycloalkane or $C_4$-$C_{20}$aromatic ring, at a weight ratio of the vinyl compound to the catalyst of 3 to more, in the presence of said catalyst, until the concentration of unreacted vinyl compound is less than about 0.5-wt%.

6. Polyolefin composition in accordance with any one of claims 1 to 5, having a haze value, determined as defined in the specification with injection molded test pieces having a thickness of 1 mm, of less than 80%.

7. Polyolefin composition in accordance with any one of claims 1 to 6, wherein the matrix phase of the heterophasic propylene copolymer comprises at least (i) a propylene homopolymer or a propylene random copolymer component, and (ii) a propylene random copolymer component.

8. Polyolefin composition according to claim 7, wherein the comonomer content of component (i) is lower than that of component (ii).

9. Polyolefin composition according to any of claims 1 to 8, wherein the haze of the polyolefin composition corresponds to the following relationship

$$\textbf{HAZE (1 mm thickness)} \leq 88 \cdot e^{(-0.033X)}\%,$$

   wherein X = amount of low-density polyethylene in the final composition, wt%.

10. Process for preparing a polyolefin composition in accordance with any one of claims 1 to 9, comprising in situ blending the components (A) and (B) as defined in claim 1 and mechanically blending the obtained product of (A) and (B) with the component (C).

11. Method for improving the haze value and/or the impact properties of a heterophasic propylene copolymer comprising a polymeric nucleating agent as defined in any one of claims 1 to 10, by mixing with low-density polyethylene as defined in claim 1.

**12.** Use of low-density polyethylene as defined in claim 1 for improving the haze value and/or the impact properties of a heterophasic propylene copolymer containing a polymeric nucleating agent as defined in any one of claims 1 to 10.

**Patentansprüche**

**1.** Polyolefinzusammensetzung, enthaltend

(A) mindestens 80 Gew.-% eines heterophasischen Propylen-Copolymers, das mindestens 75 bis 96 Gew.-% einer statistischen Propylen-Copolymermatrixphase, die bis zu 10 Gew.-% Ethylen und/oder mindestens ein $C_4$-$C_8$ $\alpha$-Olefin umfasst, und bis zu 25 Gew.-% einer dispersen Phase umfasst, die ein elastomeres Propylen-Copolymer mit 20 bis 80 Gew.-% eines Olefincomonomers, vorzugsweise Ethylen und/oder $C_4$-$C_8$ $\alpha$-Olefin, umfasst,
(B) ein polymeres Nukleierungsmittel, und
(C) bis zu 20 Gew.-% Polyethylen mit einer niedrigen Dichte, das eine Dichte von 910 bis 940 kg/m$^3$ besitzt.

**2.** Polyolefinzusammensetzung gemäß Anspruch 1, wobei das Polyethylen mit niedriger Dichte LDPE ist.

**3.** Polyolefinzusammensetzung nach einem der Ansprüche 1 und 2, wobei das polymere Nukleierungsmittel ausgewählt ist zwischen Vinylcycloalkanpolymeren und Vinylalkanpolymeren.

**4.** Polyolefinzusammensetzung nach einem der Ansprüche 1, 2 und 3, wobei das polymere Nukleierungsmittel in einer Menge von 15 bis 1.000 ppm (Gewicht), basierend auf dem Gewicht des heterophasischen Propylen-Copolymers, enthalten ist.

**5.** Polyolefinzusammensetzung nach einem der Ansprüche 1 bis 4, wobei das heterophasische Propylen-Copolymer ein im Reaktor hergestelltes heterophasisches Propylen-Copolymer ist, das in der Gegenwart eines modifizierten Katalysators hergestellt ist, wobei der modifizierte Katalysator erhältlich ist durch Polymerisieren einer Vinylverbindung mit der Formel

$$CH_2 = CH\text{-}CHR_1R_2,$$

wobei $R_1$ und $R_2$ zusammen mit dem Kohlenstoffatom, an das sie gebunden sind, einen gegebenenfalls substituierten gesättigten oder ungesättigten oder aromatischen Ring oder ein kondensiertes Ringsystem bilden, wobei der Ring oder der kondensierte Ringteil 4 bis 20 Kohlenstoffatome enthält, vorzugsweise 5 bis 12-gliedrige gesättigte oder ungesättigte oder aromatische Ringe oder ein kondensiertes Ringsystem, oder unabhängig voneinander ein lineares oder verzweigtes $C_4$-$C_{30}$-Alkan, $C_4$-$C_{20}$-Cycloalkan oder einen aromatischen $C_4$-$C_{20}$ Ring bedeuten, mit einem Gewichtsverhältnis von der Vinylverbindung zu dem Katalysator von 3 oder mehr, in der Gegenwart von dem genannten Katalysator, bis die Konzentration der nicht umgesetzten Vinylverbindung weniger als etwa 0,5 Gew.-% beträgt.

**6.** Polyolefinzusammensetzung nach einem der Ansprüche 1 bis 5, die einen Trübungswert, bestimmt wie in der Beschreibung beschrieben mit spritzgegossenen Prüfkörpern mit einer Dicke von 1 mm, von weniger als 80% besitzt.

**7.** Polyolefinzusammensetzung nach einem der Ansprüche 1 bis 6, wobei die Matrixphase des heterophasischen Propylen-Copolymers mindestens (i) ein Propylenhomopolymer oder eine statistische Propylen-Copolymerkomponente und (ii) eine statistische Propylen-Copolymerkomponente enthält.

**8.** Polyolefinzusammensetzung nach Anspruch 7, wobei der Comonomergehalt der Komponente (i) geringer ist als der der Komponente (ii).

**9.** Polyolefinzusammensetzung nach einem der Ansprüche 1 bis 8, wobei die Trübung der Polyolefinzusammensetzung der folgenden Beziehung entspricht

$$\text{TRÜBUNG (1 mm Dicke)} \leq 88 \cdot e^{(-0,033X)}\%,$$

wobei X der Gehalt an Polyethylen mit niedriger Dichte in der Endzusammensetzung in Gew.-% ist.

10. Verfahren zur Herstellung einer Polyolefinzusammensetzung nach einem der Ansprüche 1 bis 9, umfassend in situ Mischen der Komponenten (A) und (B), wie in Anspruch 1 definiert, und mechanisches Mischen des erhaltenen Produkts aus (A) und (B) mit der Komponente (C).

11. Verfahren zum Verbessern des Trübungswerts und/oder der Schlageigenschaften eines heterophasischen Propylen-Copolymers, umfassend ein polymeres Nukleierungsmittel, wie in einem der Ansprüche 1 bis 10 definiert, durch Mischen mit Polyethylen mit niedriger Dichte, wie in Anspruch 1 definiert.

12. Verwendung von Polyethylen mit niedriger Dichte, wie in Anspruch 1 definiert, zum Verbessern des Trübungswerts und/oder der Schlageigenschaften eines heterophasischen Propylen-Copolymers enthaltend ein polymeres Nukleierungsmittel, wie in einem der Ansprüche 1 bis 10 definiert.

## Revendications

1. Composition de polyoléfine contenant :

(A) au moins 80 % en poids d'un copolymère de propylène hétérophasique, qui comprend au moins 75 à 96 % en poids d'une phase de matrice copolymère statistique de propylène comprenant jusqu'à 10 % en poids d'éthylène et/ou d'au moins une $\alpha$-oléfine en $C_4$ à $C_8$, et jusqu'à 25 % en poids d'une phase dispersée comprenant un copolymère de propylène élastomère avec 20 à 80 % en poids d'un comonomère d'oléfine, de préférence d'éthylène et/ou d'$\alpha$-oléfine en $C_4$ à $C_8$,
(B) un agent de nucléation polymère, et
(C) jusqu'à 20 % en poids d'un polyéthylène basse densité ayant une masse volumique de 910 à 940 kg/m$^3$.

2. Composition de polyoléfine selon la revendication 1, dans laquelle le polyéthylène basse densité est un LDPE.

3. Composition de polyoléfine selon l'une quelconque des revendications 1 et 2, dans laquelle l'agent de nucléation polymère est choisi parmi les polymères de vinylcycloalcane et les polymères de vinylalcane.

4. Composition de polyoléfine selon l'une quelconque des revendications 1, 2 et 3, dans laquelle l'agent de nucléation polymère est présent en une quantité de 15 à 1000 ppm (en poids), par rapport au poids du copolymère de propylène hétérophasique.

5. Composition de polyoléfine selon l'une quelconque des revendications 1 à 4, dans laquelle le copolymère de propylène hétérophasique est un copolymère de propylène hétérophasique préparé en réacteur, produit en présence d'un catalyseur modifié, et dans laquelle le catalyseur modifié peut être obtenu par polymérisation d'un composé de vinyle de formule :

$$CH_2=CH-CHR_1R_2$$

dans laquelle R1 et R2, conjointement avec l'atome de carbone auquel ils sont rattachés, forment un cycle saturé ou insaturé ou aromatique, éventuellement substitué, ou un système cyclique condensé, le fragment cyclique ou le fragment cyclique condensé contenant de quatre à 20 atomes de carbone, de préférence un cycle saturé ou insaturé ou aromatique, à 5 à 12 chaînons, ou un système cyclique condensé, ou bien représentent indépendamment un alcane en $C_4$ à $C_{30}$ linéaire ou ramifié, cycloalcane en $C_4$ à $C_{20}$ ou un cycle aromatique en $C_4$ à $C_{20}$, avec un rapport en poids du composé de vinyle sur le catalyseur de 3 ou plus, en présence dudit catalyseur, jusqu'à ce que la concentration de composé de vinyle n'ayant pas réagi soit inférieure à environ 0,5 % en poids.

6. Composition de polyoléfine selon l'une quelconque des revendications 1 à 5, ayant une valeur de voile, déterminée comme défini dans la description avec des éprouvettes moulées par injection d'une épaisseur de 1 mm, inférieure à 80 %.

**7.** Composition de polyoléfine selon l'une quelconque des revendications 1 à 6, dans laquelle la phase de matrice du copolymère de propylène hétérophasique comprend au moins (i) un homopolymère de propylène ou un composant copolymère statistique de propylène, et (ii) un composant copolymère statistique de propylène.

**8.** Composition de polyoléfine selon la revendication 7, dans laquelle la teneur en comonomère du composant (i) est inférieure à celle du composant (ii).

**9.** Composition de polyoléfine selon l'une quelconque des revendications 1 à 8, dans laquelle le voile de la composition de polyoléfine correspond à la relation suivants :

$$\text{voile (épaisseur 1 mm)} \leq 88 \cdot e^{(-0,033X)} \text{ \%}$$

dans laquelle X est la quantité de polyéthylène basse densité dans la composition finale, en % en poids.

**10.** Procédé pour préparer une composition de polyoléfine selon l'une quelconque des revendications 1 à 9, comprenant le mélange in situ des composants (A) et (B) tels que définis dans la revendication 1 et le mélange combinaison mécanique du produit de (A) et (B) ainsi obtenu avec le composant (C).

**11.** Procédé pour améliorer la valeur de voile et/ou les propriétés aux chocs d'un copolymère de propylène hétérophasique comprenant un agent de nucléation polymère tel que défini dans l'une quelconque des revendications 1 à 10, par mélange avec un polyéthylène basse densité tel que défini dans la revendication 1.

**12.** Utilisation d'un polyéthylène basse densité tel que défini dans la revendication 1 pour améliorer la valeur de voile et/ou les propriétés aux chocs d'un copolymère de propylène hétérophasique contenant un agent de nucléation polymère tel que défini dans l'une quelconque des revendications 1 à 10.

**Figure 1**

BNT H/R-block copo

Haze, 1 mm plaque, %

Tensile modulus

base

5 % LDPE

15% LDPE
measured from
2 mm plaque

◆ HRblock   ■ HRb LD5%   △ HRb LD15%

## FIGURE 2

**Haze vs thickness**

## FIGURE 3 (haze, 1 mm)

**Chart Title**

$y = 87,369e^{-0,0469x}$

$R^2 = 0,9681$

**EP 1 801 156 B1**

**REFERENCES CITED IN THE DESCRIPTION**

**Patent documents cited in the description**

- WO 2004055101 A
- EP 1236769 A1
- US 6747103 B1
- EP 1510547 A1
- US 5234879 A
- WO 9219653 A
- WO 9219658 A
- WO 9933843 A
- EP 0887379 A1
- WO 9212182 A
- WO 9924478 A
- WO 0068315 A
- WO 9924479 A